# EUROPÄISCHE PATENTANMELDUNG

(11) **EP 0 705 965 A1**
(43) Veröffentlichungstag der Anmeldung: **10.04.1996**
(21) Anmeldenummer: 95113450.1
(22) Anmeldetag: 28.08.1995
(51) Int. Cl.: F02B 27/00

(54) **Saugrohranlage für eine Brennkraftmaschine mit zwei Reihen von Zylindern**

(30) Priorität: 05.10.1994 DE 4435554
(71) Anmelder: Dr.Ing.h.c. F. Porsche Aktiengesellschaft, D-70435 Stuttgart (DE)
(72) Erfinder: Schultz, Willi, D-75245 Neulingen (DE); Rutschmann, Erwin, D-75233 Tiefenbronn (DE)

(57) **Zusammenfassung**

Die Saugrohranlage für eine Brennkraftmaschine mit zwei Reihen (1,2) von Zylindern (3), die jeweils mindestens ein ständig betriebenes Einlaßventil (4) und mindestens ein zuschaltbares Einlaßventil (5,6) aufweist, hat getrennte Saugrohre (12,17) für das ständig betriebene Einlaßventil (4) und das/die zuschaltbaren Einlaßventile (5,6). Die Saugrohre (12,17) jeder Zylinderreihe (1,2) sind mit einem gemeinsamen Resonanzbehälter (13,14) je Zylinderreihe (1,2) verbunden. Diese wiederum werden an einen gemeinsamen Saugstutzen (19) angeschlossen. Damit ergibt sich eine einfach aufgebaute, kostengünstige Saugrohranlage, mit der in nahezu allen Drehzahlbereichen ein günstiger Drehmomentverlauf möglich ist.

## Beschreibung

Die Erfindung geht aus von einer Saugrohranlage für eine Brennkraftmaschine mit zwei Reihen von Zylindern nach der Gattung des Hauptanspruches.

Aus der DE 40 08 610 C2 ist eine Brennkraftmaschine mit zwei Reihen von Zylindern bekannt, von denen jeder drei Einlaßventile aufweist, die auf einer Seite der Mittellängsebene des Zylinderkopfes angeordnet sind. Das mittlere der drei Einlaßventile ist dabei ständig betrieben, die beiden äußeren Einlaßventile werden ab einem mittleren Drehzahlbereich der Brennkraftmaschine zugeschaltet, unterhalb dieses Bereiches werden sie nicht betätigt. Die Saugrohranlage dieser Brennkraftmaschine ist mit insgesamt vier Resonanzbehältern versehen, zwei Niedrigdrehzahl-Resonanzbehältern und zwei Hochdrehzahl-Resonanzbehältern. Die mittleren, ständig betriebenen Einlaßventile sind dabei über Einzelsaugrohre mit jeweils einem der beiden Niedrigdrehzahl-Resonanzbehälter verbunden, während die beiden äußeren, zuschaltbaren Einlaßventile über Einzelsaugrohre mit Sperrelementen jeweils mit einem einer Zylinderreihe zugeordneten Hochdrehzahl-Resonanzbehälter verbunden sind. Die vier Resonanzbehälter sind mit einer gemeinsamen Saugleitung verbunden, in welche eine Drosselklappe zur Steuerung der Brennkraftmaschinenlast eingesetzt ist.

Der Erfindung liegt die Aufgabe zugrunde, eine Saugrohranlage für eine Brennkraftmaschine mit zwei Reihen von Zylindern und jeweils mindestens einem ständig betriebenen Einlaßventil und mindestens einem in Abhängigkeit bestimmter Betriebsbereiche zuschaltbaren Einlaßventil so auszubilden, daß ein guter Drehmomentverlauf und eine wirksame Zündung bzw. Verbrennung des angesaugten Gemisches in allen Betriebsbereichen gewährleistet ist, wobei die Saugrohranlage möglichst einfach und platzsparend aufgebaut sein soll.

Diese Aufgabe wird erfindungsgemäß mit den kennzeichnenden Merkmalen des Hauptanspruches gelöst. Durch Nutzung von getrennten Saugrohren für die ständig betriebenen Einlaßventile und die zuschaltbaren Einlaßventile und deren Anbindung an jeweils einen Resonanzbehälter ergibt sich eine platzsparende, sehr einfach aufgebaute Saugrohranlage, die dennoch einen sehr effektiven Motorbetrieb ermöglicht. Aufgrund der Verwendung von Einzelsaugrohren für die ständig betriebenen Einlaßventile ist in diesen Saugrohren eine relativ hohe Strömungsgeschwindigkeit möglich, die eine gute Durchmischung und Verbrennung des Gemisches sicherstellt. Die Verbindung der Saugrohre der zuschaltbaren Einlaßventile mit jeweils dem gleichen Resonanzbehälter ergibt einen einfachen, platzsparenden Aufbau, ohne daß wesentliche Nachteile im Ansaugverhalten beim Zuschalten bzw. nach dem Zuschalten der schaltbaren Einlaßventile zu befürchten sind. Die Verbindung der beiden Resonanzbehälter mit einem gemeisamen Saugstutzen ermöglicht den platzsparenden und kostengünstigen Anschluß an eine gemeinsame Luftfiltereinheit.

Durch Anbindung des Saugstutzens an ein die beiden Resonanzbehälter koppelndes Verbindungsrohr und Unterbringung einer gemeinsamen Drosselklappe für beide Resonanzbehälter und damit für alle Zylinder wird der Anteil an bewegten Bauelementen in der Saugrohranlage minimiert. Abstimmungsprobleme zwischen einzelnen drehbeweglichen oder verschiebbaren Bauteilen treten nicht auf.

Eine gute Anpassung an verschiedene Drehzahlbereiche bzw. unterschiedliche Drehmomentabfragen ist gegeben, wenn die Saugrohre unterschiedlich große Saugquerschnitte aufweisen, d.h., wenn die Saugrohre der ständig betriebenen Einlaßventile einen relativ kleinen und die der zuschaltbaren Einlaßventile einen größeren Querschnitt aufweisen, da das ständig betriebene Einlaßventil in erster Linie für den unteren Drehzahl- bzw. Lastbereich ausgelegt ist, während in mittleren Drehzahl- bzw. Lastbereichen die Ansaugung über mehrere Ventile je Zylinder bei entsprechend großem Luftdurchsatz erfolgt.

Durch Koppelung der beiden Resonanzbehälter über ein weiteres Verbindungsrohr wird auf einfache Weise eine Verbesserung des Drehmomentverlaufes erreicht.

Ein platzsparender Aufbau wird auf vorteilhafte Weise erreicht, wenn die Saugrohre je Zylinder weitgehend parallel geführt werden und wenn darüberhinaus auch noch alle Saugrohre einer Zylinderreihe weitgehend parallel geführt werden.

Eine derartige Saugrohranlage ist besonders geeignet für Brennkraftmaschinen mit drei Einlaßventilen, von denen ein Einlaßventil ständig betätigt wird und die beiden anderen Einlaßventile zuschaltbar sind. Das ständig betriebene Einlaßventil wird dabei über ein Saugrohr mit dem Resonzbehälter verbunden, während die beiden zuschaltbaren Einlaßventile über ein gemeinsames Saugrohr, das über einen Teil seiner Länge geteilt ausgebildet sein kann, mit dem Resonanzbehälter verbunden sind. Durch Anpassung der Durchmesser dieser Saugrohre an die Drehzahlbereiche ist ein gleichmäßiger Drehmomentverlauf über die Drehzahl möglich. Das ständig betriebene Einlaßventil wird dabei über ein Saugrohr mit relativ kleinem Durchmesser versorgt, so daß ein günstiger Drehmomentverlauf im unteren Drehzahlbereich ermöglicht wird. Die zuschaltbaren Einlaßventile werden über ein Saugrohr mit relativ großem Durchmesser beaufschlagt, so daß im mittleren Drehzahlbereich und im oberen Drehzahlbereich ein günstiger Drehmomentverlauf gegeben ist.

Weitere Vorteile der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt in schematischer Darstellung die Saugrohranlage einer zweireihigen Brennkraftmaschine.

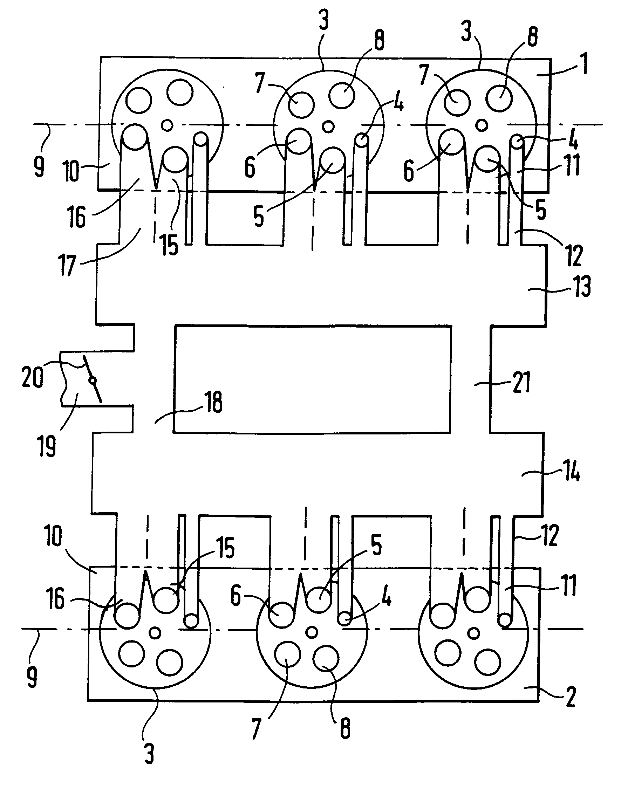

Die in der einzigen Figur der Zeichnung beispielhaft und schematisch dargestellte Brennkraftmaschine ist ohne Beschränkung auf diese Ausführungsform als sechszylindrige Brennkraftmaschine dargestellt, deren Zylinderreihen in Boxeranordnung oder in V-Form angeordnet sein können. Jede der beiden Zylinderreihen 1, 2 weist drei Zylinder 3 auf, deren Gaswechselsteuerung über insgesamt fünf Ventile erfolgt. Drei der Ventile sind als Einlaßventile 4, 5, 6, die beiden anderen Ventile sind als Auslaßventile 7, 8 ausgeführt. Die drei Einlaßventile 4 bis 6 sind dabei jeweils auf einer Seite einer Mittellängsebene 9 durch den jeweiligen Zylinderkopf bzw. durch die Zylinderreihe 1, 2 angeordnet. Für eine gute Zugänglichkeit der Einlaßventile sind diese bei einer Brennkraftmaschine in Boxeranordnung vorteilhafterweise oberhalb der Mittellängsebene 9 angeordnet, so daß die Auslaßventile 7, 8 jeweils unterhalb dieser Ebene angeordnet sind. Bei Anordnung der Zylinderreihen 1, 2 in V-Form wird die Gruppierung vorteilhafterweise so gewählt, daß die Einlaßventile 4 bis 6 einander zugewandt sind, d.h. jeweils auf der Innenseite angeordnet sind, während die Auslaßventile 7, 8 auf der Außenseite der Mittellängsebene 9 angeordnet werden. Die Einlaßventile 4 bis 6 sind dabei jeweils so zueinander gruppiert, daß das ständig betriebene Einlaßventil 4 das in Umfangsrichtung erste Ventil ist, die beiden zuschaltbaren Einlaßventile 5 und 6 sind in Umfangsrichtung dahinter angeordnet. Das ständig betriebene Einlaßventil 4 hat dabei im Vergleich zu den zuschaltbaren Einlaßventilen 5 und 6 den kleineren Durchmesser. Jedes der ständig betriebenen Einlaßventile 4 ist über einen im Zylinderkopf 10 ausgebildeten separaten Einlaßkanal 11 mit einem Saugrohr 12 verbunden, das wiederum an einen Resonanzbehälter 13 bzw. 14 angeschlossen ist. Dabei ist der eine Resonanzbehälter 13 der ersten Zylinderreihe 1 zugeordnet, während der zweite Resonanzbehälter 14 der zweiten Zylinderreihe 2 zugeordnet ist. Entsprechend sind die Saugrohre 12 der Zylinder der ersten Zylinderreihe 1 mit dem ersten Resonanzbehälter 13 verbunden, während die Saugrohre 12 der zweiten Zylinderreihe 2 mit dem zweiten Resonanzbehälter 14 verbunden sind. Die zuschaltbaren Einlaßventile 5 und 6 sind über separate, im Zylinderkopf ausgebildete Einlaßkanäle 15 bzw. 16 mit einem Saugrohr 17 verbunden, das ebenfalls an den Resonanzbehälter 13 bzw. 14 angeschlossen ist. Das Saugrohr 17 kann als gemeinsames Saugrohr für die beiden Einlaßkanäle 15 und 16 ausgebildet sein, wobei eine teilweise Trennung, insbesondere auf der den Einlaßkanälen 15, 16 zugewandten Seite möglich ist. Eine derartige Trennung ist in der Zeichnung beispielhaft als gestrichelte Linie dargestellt. Es ist auch möglich, die beiden Einlaßkanäle 15, 16 über zwei einzelne Saugrohre mit dem jeweiligen Resonanzbehälter 13, 14 zu verbinden. Die entsprechenden Saugrohre werden dabei vorteilhafterweise parallel geführt und können miteinander verbunden sein bzw. in einem gemeinsamen Bauelement ausgebildet werden. Der Querschnitt der Saugrohre 12 der ständig betriebenen Einlaßventile 4 ist dabei kleiner als der Querschnitt der Saugrohre 16 der zuschaltbaren Einlaßventile 5 und 6.

Die beiden Resonanzbehälter 13 und 14 sind über ein erstes Verbindungsrohr 18 miteinander verbunden, von dem ein gemeinsamer Saugstutzen 19 ausgeht, in dem eine Drosselklappe 20 zur Steuerung der Luftzufuhr angeordnet ist. Etwa parallel zum ersten Verbindungsrohr 18 verläuft ein zweites Verbindungsrohr 21 zur Koppelung der beiden Resonanzbehälter, über die ein günstiges Drehmomentverhalten erreicht wird.

Die in diesem Ausführungsbeispiel dargestellte Brennkraftmaschine wird so betrieben, daß die zuschaltbaren Einlaßventile 5 und 6 nicht gemeinsam zugeschaltet werden, sondern daß in Abhängigkeit vom Drehzahl- und Lastverhalten erst eines der beiden Einlaßventile zugeschaltet wird, und das zweite der zuschaltbaren Einlaßventile nachfolgend, insbesondere im Höchstlastbereich zugeschaltet wird.

## Patentansprüche

1. Saugrohranlage für eine Brennkraftmaschine mit zwei Reihen (1, 2) von Zylindern (3), deren Brennräume jeweils mindestens zwei auf einer Seite einer Mittellängsebene (9) eines Zylinderkopfes angeordnete Einlaßventile für den Gaswechsel aufweisen, von denen mindestens ein erstes Einlaßventil (4) ständig betätigt wird und mindestens ein weiteres Einlaßventil (5, 6) zeitweise betätigbar ist, mit jeweils einem separaten, in einer Zylinderkopfanordnung integrierten Gaswechselkanal (12, 15, 16) je Einlaßventil, mit mindestens zwei an die Gaswechselkanäle angeschlossenen Saugrohren (12, 17), von denen ein erstes (12) dem ständig betätigten Einlaßventil und ein zweites (17) dem/den zeitweise betätigbaren weiteren Einlaßventil/-ventilen zugeordnet ist, **dadurch gekennzeichnet**, daß die Saugrohre mit jeweils einem gemeinsamen Resonanzbehälter (13, 14) je Zylinderreihe verbunden sind und daß die beiden Resonanzbehälter wiederum an einen gemeinsamen Saugstutzen (19) angeschlossen sind.

2. Saugrohranlage nach Anspruch 1, dadurch gekennzeichnet, daß der Saugstutzen (19) von einem Verbindungsrohr (18) zwischen den beiden Resonanzbehältern (13, 14) ausgeht, und daß in den gemeinsamen Saugstutzen eine den Gasdurchsatz steuernde Drosselklappe (20) eingesetzt ist.

3. Saugrohranlage nach Anspruch 1 oder 2, dadurch gekennzeichnet, daß die Saugrohre unterschiedlich große Rohrquerschnitte aufweisen.

4. Saugrohranlage nach Anspruch 3, dadurch gekennzeichnet, daß das dem ständig betätigten Einlaßventil (4) zugeordnete Saugrohr (12) den kleineren Rohrquerschnitt aufweit.

5. Saugrohranlage nach einem der Ansprüche 1 bis 4, dadurch gekennzeichnet, daß die beiden Resonanzbehälter (13, 14) über ein weiteres Verbindungsrohr (21) miteinander verbunden sind.

6. Saugrohranlage nach einem der Ansprüche 1 bis 5, dadurch gekennzeichnet, daß die Saugrohre je Zylinder weitgehend parallel geführt sind.

7. Saugrohranlage nach einem der Ansprüche 1 bis 6, dadurch gekennzeichnet, daß die in einen Resonanzbehälter mündenden Saugrohre einer Zylinderreihe weitgehend parallel geführt sind.

8. Saugrohranlage nach einem der Ansprüche 1 bis 7, dadurch gekennzeichnet, daß jeder Brennraum über drei Einlaßventile (4, 5, 6) beaufschlagt wird, von denen ein Einlaßventil (4) ständig betätigt wird, und daß die beiden zeitweise betätigbaren Einlaßventile (5, 6) mit einem gemeinsamen Saugrohr (17) beaufschlagt sind.
